# DEMANDE DE BREVET EUROPEEN

(11) **EP 1 818 816 A1**
(43) Date de publication de la demande: **15.08.2007**
(21) Numéro de dépôt: 06300061.6
(22) Date de dépôt: 24.01.2006
(51) Int. Cl.: G06F 9/44

(54) **Procédé de création de service, produit de programme d'ordinateur et système informatique de mise en oeuvre de ce procédé**

(71) Demandeur: Alcatel Lucent, 75008 Paris (FR)
(72) Inventeur: Larvet, Philippe, 91470, FORGES LES BAINS (FR)
(74) Mandataire: Sciaux, Edmond

(57) **Abrégé**

L'invention propose un procédé (100) de création de service à partir d'une requête. Ce procédé comprend une étape d'analyse sémantique (30) d'une requête en langage naturel, par exemple émise (20) depuis un téléphone portable ou un assistant numérique personnel (150). De la sorte, la requête peut être formulée (10) en langage naturel, sans qu'il soit nécessaire de posséder de quelconques connaissances techniques. L'analyse sémantique (30) effectuée permet d'identifier (35) des exigences (ou spécifications) de services web. Ensuite, il est procédé à une détermination (40) et à un séquençage (50) de services web en fonction des exigences de services identifiées. Un nouveau service est alors mis à disposition, par exemple à l'utilisateur qui en a fait la requête correspondante en langage naturel.

## Description

La présente invention concerne un procédé de création de service ainsi qu'un produit de programme d'ordinateur et un système informatique pour la mise en oeuvre de ce procédé.

Dans la présente description, les termes suivants sont employés avec le sens indiqué, sauf mention particulière :
- « annuaire UDDI », pour « Universal Description Discovery and Integration », désigne un annuaire basé sur XML, dédié plus particulièrement aux services web, notamment dans le cadre d'architectures de type SOA (pour « Service Oriented Architecture »). Il existe des annuaires privés et publics, des annuaires spécifiques pour certains fournisseurs de services. Un annuaire UDDI permet de localiser sur le réseau un service Web recherché. Il comprend notamment des informations d'accès aux services Web et des informations contextuelles, par exemple une brève description des services et leurs fonctionnalités. L'annuaire UDDI contient notamment :
   - des pages blanches comprenant des informations relatives à des entreprises;
   - des pages jaunes, qui recensent des services web de ces entreprises au standard WSDL ; et
   - des pages vertes fournissant des informations techniques précises sur les services fournis. Ces informations techniques concernent entre autres des descriptions de services, de liaison ou de processus métiers associés.
- « application informatique » : désigne tout programme ou tout ensemble de programmes prévus pour fonctionner conjointement, dont le but est de rendre des services à leurs utilisateurs.
- « BPEL » : Le langage BPEL, pour « Business Process Execution Language », est un langage XML utilisé pour la notation formelle de logiques d'interactions et de protocoles d'interactions, qui étend la sémantique du modèle d'interaction de services Web. Au-delà des interactions entre web services, BPEL décrit la logique applicative et l'ordre des interactions.
- « composition » : dans le contexte des services Web, désigne une agrégation de services susceptibles d'agir comme un nouveau service à part entière. On distinguera la composition par "orchestration", dans laquelle l'accent est mis sur l'ordonnancement des traitements effectués par les services composés, et la composition par "chorégraphie", dans laquelle l'ordonnancement des services se base sur les messages échangés et sur la prise en compte des événements par les services composés.
- « paramètre d'entrée » désigne une donnée fournie en entrée à une opération de traitement d'un service web ; les données d'entrée de l'opération sont transformées par l'opération pour fournir le résultat de sortie.
- « résultat de sortie » désigne l'information résultant du traitement effectué par une opération d'un service web sur ses données (ou "paramètres") d'entrée. Le résultat de sortie est le produit attendu par l'utilisateur du service web, cet utilisateur pouvant être une application informatique ou un autre service web.
- « RSS » (pour « Really Simple Syndication ») est un format utilisé pour décrire le contenu d'une page Web, basé sur le XML, qui permet d'indexer de façon automatisée le contenu d'un site Web et de le mettre à disposition.
- « service Web » désigne une application accessible sur l'INTERNET, via une interface standard, qui peut interagir dynamiquement avec des applications ou d'autres services web en utilisant des protocoles de communication, par exemple basés sur le XML, et ce, indépendamment du système d'exploitation et des langages de programmation utilisés. Au plan de ses interfaces proprement dites, un service web comprend des opérations de traitement qui fournissent des résultats à partir de données d'entrée, ou "paramètres d'entrée". Pour utiliser un service web, on appelle une de ses opérations en lui fournissant les données d'entrée attendues, et on récupère le résultat de sortie.
- « SGML»: un langage normalisé permettant de décrire les relations entre le contenu d'un document informatique et sa structure.
- « WSDL » est un langage normalisé par le W3C (version 1.1 du 15 mars 2001 - voir http://www.w3.org/TR/wsdl), faisant notamment référence au langage XML. Le WSDL décrit une Interface publique d'accès à un service web par les éléments suivants : nom du service, opérations, types de données manipulées et liens entre ces types et les opérations. Le WSDL indique ainsi comment communiquer pour utiliser le service, le protocole de communication et le format de messages requis pour communiquer avec ce service.
- « XML » (pour extensible Markup Language) : une évolution du langage SGML, laquelle permet notamment aux concepteurs de documents HTML de définir leurs propres marqueurs, dans le but de personnaliser la structure des données.

Les technologies modernes de télécommunication, en particulier l'Internet, permettent à des utilisateurs d'accéder rapidement à une variété de services. Lorsqu'un problème se pose de manière récurrente, il est courant de créer un service approprié, afin de satisfaire aux demandes répétées d'utilisateurs. Par exemple, certains moteurs de recherche Internet proposent des fonctions avancées telles qu'une traduction automatique. Cependant, certains problèmes susceptibles de se poser à un utilisateur ne sont pas résolus par un service existant. En particulier, il arrive qu'un utilisateur (sans connaissances techniques particulières) souhaite accéder à un service qui réponde à un problème ponctuel, sans que ce service n'existe. Par exemple, l'utilisateur d'un terminal IP (téléphone mobile, assistant personnel numérique, PC de poche, etc.), pourrait souhaiter obtenir une traduction dans sa langue maternelle d'un service RSS donné.

Il existe donc un besoin pour un procédé de création de service à partir d'une requête (utilisateur) ainsi que pour un produit de programme d'ordinateur et un système informatique permettant de mettre en oeuvre ce procédé.

A cette fin, L'invention propose un procédé de création de service à partir d'une requête, comprenant des étapes : d'analyse sémantique d'une requête en langage naturel ; d'identification d'exigences de services web en fonction de l'analyse sémantique effectuée ; et de détermination et séquençage de services web en fonction des exigences de services identifiées.

Dans des modes de réalisation préférés, le procédé de création de service selon l'invention comprend une ou plusieurs des caractéristiques suivantes :
- Le procédé comprend en outre une étape d'orchestration des services web séquencés ;
- l'étape de détermination de services web comprend une accession à un annuaire UDDI ;
- l'étape d'analyse sémantique de la requête comprend une analyse lexicale et sémantique ;
- l'étape de détermination et séquençage se décompose en une étape de détermination de services web puis de séquençage des services web déterminés ;
- l'étape de détermination de services web comprend : l'identification de caractéristiques de services web à partir d'une description de services web ; la comparaison d'au moins certaines de ces caractéristiques aux exigences identifiées ; et la détermination de services web en fonction d'un résultat de la comparaison ;
- l'étape de séquençage de services web comprend en outre une étape de séquençage en fonction des exigences identifiées ;
- l'étape d'identification de caractéristiques de services web comprend, pour chacun des services : l'accession à une description du service web ; et l'identification de caractéristiques de ce service à partir de la description de ce service ;
- la description de service web est en langage WSDL ;
- l'étape d'identification de caractéristiques comprend une analyse sémantique de la description de services web ;
- les caractéristiques identifiées impliquent une entrée et/ou une sortie pour chacun des services déterminés ;
- l'étape de séquençage comprend un test de compatibilité impliquant au moins une caractéristique identifiée pour chacun des services déterminés ;
- les caractéristiques identifiées comprennent, pour chacun des services : au moins deux ensembles avec au moins trois champs chacun, un premier champ de l'un des ensembles ayant trait à une entrée du service ; un premier champ de l'autre des ensembles ayant trait à une sortie du service ; un deuxième champ de chacun des ensembles ayant trait à un type de données relatif au premier champ et un troisième champ de chacun des ensembles ayant trait à une étiquette sémantique relative au premier champ, l'étape de composition comprenant une étape de test de compatibilité impliquant les trois champs de chacun des ensembles.
- Le procédé selon l'invention comprend en outre une étape de création d'un nouveau service web à partir des services web déterminés et séquencés; et
- Le procédé selon l'invention comprend en outre les étapes : de réception d'une validation des services web déterminés et séquencés ; et de mise à disposition du nouveau service web.

L'invention concerne également un produit de programme d'ordinateur adapté à mettre en oeuvre les étapes du procédé selon l'invention.

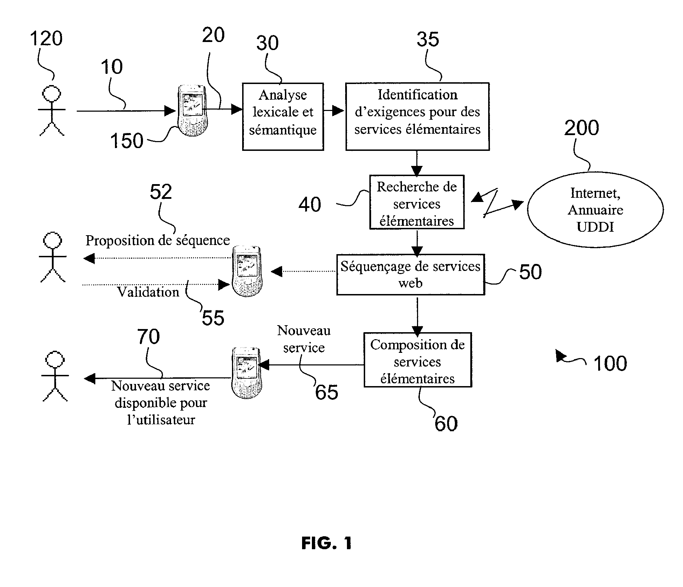

L'invention concerne encore un système informatique comprenant des moyens de code adaptés à mettre en oeuvre les étapes du procédé selon l'invention. D'autres caractéristiques et avantages de l'invention apparaîtront à la lecture de la description détaillée qui suit des modes de réalisation de l'invention, donnés à titre d'exemple uniquement et en références à des exemples, ainsi qu'au schéma annexé (figure unique), qui illustre des étapes et composantes du procédé selon un mode de réalisation de l'invention.

L'invention propose ainsi un procédé de création de service à partir d'une requête. Ce procédé comprend une étape d'analyse sémantique d'une requête en langage naturel, par exemple émise depuis un téléphone portable ou un assistant numérique personnel. De la sorte, la requête peut être formulée en langage naturel, sans qu'il soit nécessaire de posséder de quelconques connaissances techniques. L'analyse sémantique effectuée permet d'identifier des exigences (ou spécifications) de services web. Ensuite, il est procédé à une détermination et à un séquençage de services web en fonction des exigences de services identifiées. Un nouveau service est alors mis à disposition, par exemple à l'utilisateur qui en a fait la requête correspondante en langage naturel. Le procédé selon l'invention permet par exemple, à partir d'une requête exprimée en langage naturel à partir d'un téléphone mobile, de composer un nouveau service par agrégation de services web élémentaires existants trouvés sur Internet, et ensuite de mettre ce nouveau service à disposition de l'utilisateur, le cas échéant après validation d'une séquence de services élémentaires proposée.

Ce procédé est de préférence implémenté dans un outil informatique « intégré », par exemple un assistant ou une application comprenant plusieurs modules logiciels couplés, chacun de ces modules étant assigné à une tâche donnée.

La figure unique illustre des étapes et composantes du procédé selon un mode de réalisation de l'invention.

En référence à cette figure, le procédé 100 de création de service selon l'invention comprend une étape d'analyse 30 sémantique d'une requête en langage naturel.

Cette requête a par exemple été formulée (étape 10) par un utilisateur 120, à partir d'un assistant numérique personnel 150. Elle a ensuite été transmise via un réseau de télécommunication (étape 20) et reçue par un serveur (non représenté). Cette requête pourrait par exemple être la suivante : « Je veux obtenir le texte allemand traduit des informations Reuters ».

Notons qu'il est possible d'implémenter l'outil informatique précité du côté serveur ou du côté client, par exemple dans le mobile ou l'assistant personnel de ce dernier.

L'étape d'analyse 30 de la requête peut par exemple être réalisée au moyen d'un analyseur syntaxique (ou « parser », c'est-à-dire un outil apte à analyser une description à partir de la reconnaissance d'unités syntaxiques) ou une routine d'analyse syntaxique, chaîné avec un analyseur sémantique. Nous désignerons ce couplage d'analyse syntaxique et d'analyse sémantique sous le terme de (premier) « module sémantique ». Ce module est, par définition, susceptible de s'intégrer dans l'outil informatique mentionné ci-dessus et a pour but de réaliser une analyse de la requête d'un point de vue sémantique.

Cette analyse permet de structurer logiquement la requête, d'une façon interprétable au plan informatique. Diverses techniques d'analyse sémantique de textes en langage naturel sont connues. Typiquement, des noms, leurs définitions respectives et des opérations entre ces noms sont extraits ou déduits de la requête. Il est pour cela fait appel à des dictionnaires et à une analyse grammaticale, comme il est connu de l'art.

En particulier, l'étape 30 d'analyse sémantique peut tout d'abord comprendre une analyse lexicale. Dans l'exemple précédent, un premier résultat de l'analyse lexicale est une liste des mots pertinents, avec, au besoin, leurs synonymes ou formes canoniques (les mots non pertinents sont ignorés). Cette liste est distribuée dans le tableau 1.

**Tableau 1**

| **Mots pertinents** | **Formes canoniques** | **Synonymes** |
|---|---|---|
| obtenir | | |
| allemande | allemand | |
| traduit | Traduction, traduire | version |
| texte | | |
| Reuters | | |
| nouvelles | | informations, évènements |

Dans un deuxième temps, une information sémantique spécifique au contexte, peut être ajoutée par le module d'analyse sémantique, comme indiqué dans le tableau 2.

**Tableau 2**

| **Mots pertinents** | **Formes canoniques** | **Synonymes** | **Information sémantique additionnelle** |
|---|---|---|---|
| obtenir | | | afficher |
| allemande | allemand | | langue |
| traduit | traduction, traduire | version | |
| texte | | | |
| Reuters | | | nom de société |
| nouvelles | | informations, évènements | informations, évènements, flux |

L'étape d'analyse lexicale et sémantique de la requête permet ensuite d'identifier (étape 35) des exigences (c'est-à-dire des "spécifications") de services web élémentaires. Dans l'exemple précédent, en prenant en compte l'information sémantique additionnelle et la forme grammaticale de la requête originale, le module sémantique peut produire les exigences suivantes pour les services élémentaires :
- obtenir/afficher le texte
- traduction de/version de/traduire le texte
- langue = allemand
- nouvelles/informations/événements/flux
- nom de société = Reuters.

Il est en outre possible de structurer ces exigences selon un format comparable au format WSDL (voir la définition ci-dessus), afin de faciliter les étapes suivantes, c'est-à-dire de détermination 40 et de séquençage 50 de services web. Des détails seront fournis plus loin.

L'étape de détermination 40 et de séquençage 50 de services web est effectuée en fonction des exigences de services identifiées, afin de permettre ultérieurement la création d'un nouveau service.

Cette double étape 40, 50 se décompose de préférence en une étape de détermination 40 de services web puis de séquençage 50 des services web déterminés. Ainsi, après que les services ont été déterminés, une séquence peut être proposée pour validation (étape 52) à un utilisateur. L'utilisateur peut alors valider (étape 55) ou composer sa propre séquence, laquelle donne lieu ensuite au séquençage « machine », pris en charge là encore par un module idoine.

Alternativement, les services web peuvent également être déterminés l'un après l'autre puis soumis à un séquençage partiel et progressif. Dans un tel cas, les étapes de détermination 40 et de séquençage 50 sont imbriquées. A l'issue du séquençage, celui-ci peut néanmoins être soumis à un utilisateur pour validation. Notons encore que plusieurs séquences peuvent être proposées, selon un ordre calculé en fonction de critères prédéterminés.

Dans un mode de réalisation, l'étape de détermination 40 de services web comprend l'identification de caractéristiques de services web à partir d'une description de ces services web. Au cours de cette étape, des services web disponibles sont par exemple passés systématiquement en revue. Pour chacun d'eux, des caractéristiques sont identifiées et il est opéré une comparaison d'au moins certaines de ces caractéristiques avec les exigences qui ont été précédemment fixées. Ceci permet alors de déterminer des services web en fonction d'un résultat de la comparaison.

De manière plus détaillée, en ce qui concerne l'identification de caractéristiques de services web, il est fait appel à une description standardisée de ces services. De préférence, on fait appel à des descriptions individualisées de services web. De la sorte, pour un service web donné, l'outil informatique précité accède à une description de ce service puis procède à l'identification de caractéristiques spécifiques à partir de sa description. Il convient de noter que ces caractéristiques n'existent pas explicitement en tant que telles dans la description du service. Elles sont déduites par le procédé de l'invention.

Il est préférable d'utiliser des descriptions individuelles de services web, surtout si l'on dispose d'un catalogue de description, par exemple un annuaire UDDI, tel que défini plus haut.

De préférence, chaque description de services est en langage WSDL, comme c'est par exemple le cas au sein d'annuaires UDDI. On dispose ainsi d'une description standardisée pour chaque service web. En outre, une telle description est toujours disponible sur un serveur d'annuaire car elle est automatiquement construite par ce serveur à partir de l'interface externe du service web publié. Ceci offre davantage de compatibilité au procédé.

Par ailleurs, il est possible d'analyser de manière automatique de telles descriptions, par exemple au moyen d'un analyseur syntaxique (ou « parser », comme décrit plus haut). Il sera ci-après fait référence à un (second) module sémantique. Ce second module a donc pour fonction de procéder à une analyse de la description WSDL d'un point de vue sémantique.

Plus en détails, l'analyse syntaxique comprend par exemple une analyse lexicale, telle qu'elle est connue de l'art. Il est ensuite procédé à une analyse sémantique de la description de services web, afin de déterminer la signification des éléments lexicaux extraits.

L'analyse de la description des services permet d'identifier des caractéristiques pour chacun des services. Par exemple, il permet d'identifier des ensembles de caractéristiques pour chacune des opérations des services. Ces caractéristiques seront ultérieurement utilisées pour déterminer la connectivité des services identifiés.

Etant donné que les exigences fixées préalablement et les caractéristiques identifiées sont de préférence structurées de manière similaire, leur comparaison est facilitée (par exemple fondée sur un nombre de caractéristiques en commun) et rapide. A l'issu de cette comparaison et pour un jeu d'exigences donné, un service web (au moins) est déterminé. Le cas échéant, il peut s'avérer utile d'opérer un classement puis de ne garder que le « meilleur » service (au sens de la comparaison).

A l'issue de l'étape de détermination 35 de services web élémentaires, on dispose d'un nombre donné de services connus. Il est donc maintenant souhaitable de composer ces services selon une logique exprimée dans la requête.

Pour cela, on peut se baser sur les caractéristiques identifiées, lesquelles reflètent les exigences précédemment fixées. Ces caractéristiques vont alors permettre de déterminer une connectivité des services, c'est-à-dire la propension qu'ont ces services à se connecter. Ensuite, il sera possible de composer automatiquement ces services en fonction de leur connectivité.

Parmi les caractéristiques de services web, on cherche par exemple à identifier au moins une entrée et/ou une sortie pour chacune des opérations d'un service web donné.

Plus généralement, on peut par exemple rechercher les entrées-sorties de chaque opération de chaque service, en tant que "paramètres d'entrée" ou "résultats de sortie" (voir plus haut les définitions de ces termes). De la sorte, il sera ensuite possible de tester la connectivité des services web en comparant les caractéristiques d'entrées/sorties de leurs opérations. Par exemple, un service A ayant une opération fournissant une sortie compatible avec une entrée d'une opération d'un service B est susceptible d'être connecté avec ce dernier.

Afin de déterminer la connectivité des services et en vue de la composition future de ces services, on pourra, dans un mode de réalisation, constituer un ensemble de caractéristiques pour chaque entrée et chaque sortie des opérations d'un service web donné.

Si une opération d'un service web présente plusieurs entrées ou plusieurs sorties, un nombre correspondant d'ensembles pourra être établi lors de l'analyse de la description du service web.

En plus du nom du paramètre lui-même, ces ensembles peuvent par exemple présenter trois champs chacun (ou plus, selon le modèle de test envisagé). Notons cependant que l'utilisation de deux champs pourrait s'avérer suffisante selon l'interprétation qui est faite de la description WSDL.

Chaque ensemble peut donc, de préférence, présenter trois champs et se rapporter à un paramètre d'entrée ou à un résultat de sortie d'une opération du service web. Un premier champ se rapporte à l'information d'entrée ou de sortie pour le paramètre ou le résultat concerné. Un deuxième champ de chaque ensemble précise le type de données du paramètre ou du résultat. Le type de données est l'un des éléments présents dans la description WSDL du service. Un troisième champ se rapporte à une étiquette sémantique (ou « semantic tag » ou « SemTag » dans l'exemple plus loin), qui sera associée au paramètre ou au résultat. Une étiquette sémantique peut ici être vue comme un nom, un groupe de caractères ou plus généralement un code associé à la donnée et servant à la caractériser davantage au plan sémantique. Notons que si le type peut être directement extrait d'une description WSDL, l'étiquette est, elle, apposée après analyse de cette même description.

Le test de compatibilité des caractéristiques peut alors impliquer chaque champ de chaque ensemble.

On pourra faire appel au second module sémantique, évoqué plus haut et qui fait typiquement partie intégrante de l'outil informatique précité, pour positionner une étiquette sémantique sur chaque type de données en entrée et en sortie. Cette étiquette précise la nature d'une donnée d'entrée/sortie et précise donc la manière dont la donnée peut être traitée. Chaque donnée d'entrée/sortie se trouve ainsi décrite par un triplet:
{entrée ou sortie, type de donnée, étiquette sémantique}.

On montre, ci-après, un extrait de fichier XML correspondant à une description sémantique, à l'aide de trois champs, des entrées d'un service web de traduction qui sera repris plus loin (cet extrait de fichier XML est issu d'un traitement sémantique effectué à partir d'un fichier WSDL correspondant) :

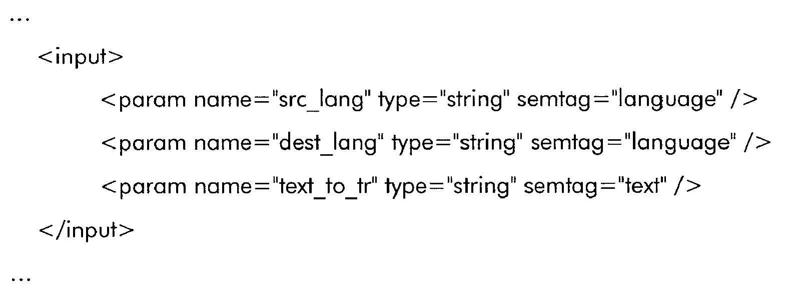

On voit ainsi que chaque paramètre, en plus de l'information "input", est doté de trois champs correspondant à son nom, son type, et une étiquette sémantique (« semtag »). Les trois informations qui seront ensuite utilisées lors du test de compatibilité entre services sont : l'information d'entrée ou de sortie (« input » ou « output»), l'information de type et l'étiquette sémantique.

Des explications plus détaillées sont maintenant données concernant l'analyse sémantique.

Lorsqu'un fichier WSDL est analysé : quatre parties principales peuvent être identifiées qui correspondent aux types, messages, opérations et nom du service. En outre, d'autres informations correspondant au « PortType » et au « Binding » sont identifiées (ces dernières terminologies étant des terminologies classiques d'une description WSDL), lesquelles serviront à faire le lien entre les entrées/sorties de l'opération et les messages.

Un premier niveau d'analyse, purement syntaxique, de la description WSDL permet d'obtenir la structure syntaxique « utile » du service, c'est-à-dire les informations nécessaires et suffisantes. On obtient ces informations principalement à partir des quatre parties précitées. Les éléments inutiles au but recherché sont enlevés. Les informations restantes sont réordonnées et inter reliées grâce aux informations de « Binding » et de « PortType ». Ceci s'obtient facilement à l'aide d'un analyseur syntaxique. A ce niveau, les étiquettes sémantiques ne sont pas encore posées.

A titre d'exemple, la structure syntaxique utile obtenue pour le service de traduction est la suivante (avec les terminologies du langage XML) :

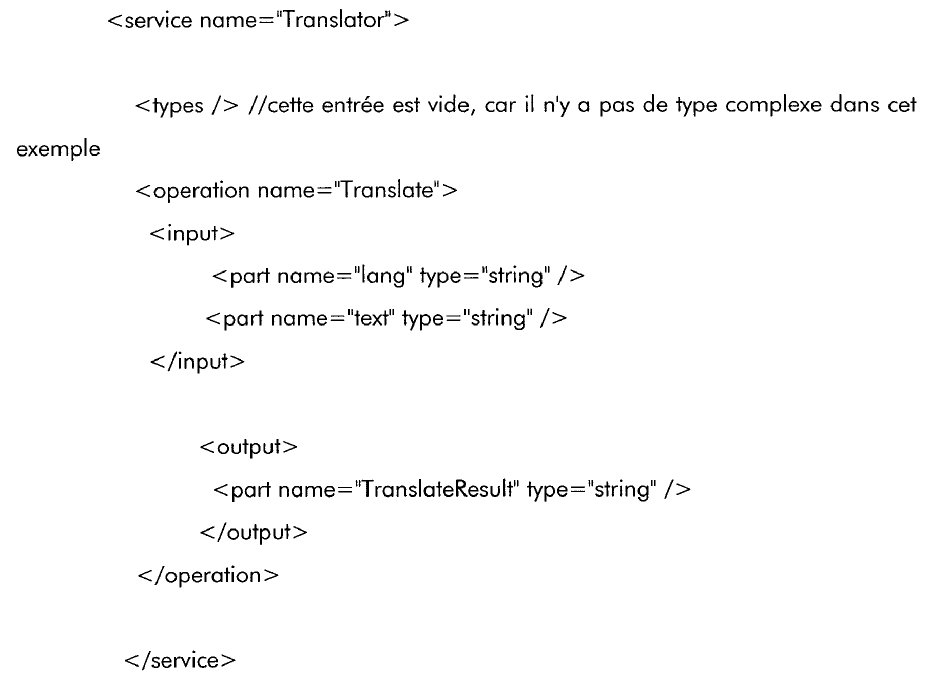

A partir de la structure syntaxique utile, une analyse plus fine est faite à l'aide du second module sémantique. Ce module peut par exemple se charger des opérations suivantes. Il repère les termes utilisés (c'est-à-dire ci-dessus les termes « Translate », « lang », « text », « TranslateResult »), les éclate (ces termes sont généralement écrits de manière similaire aux termes utilisés dans le langage de programmation ou séparés par des caractères « _ », etc.), afin de «déconcaténer» ces termes. Le module expanse ensuite (par recherche dans un dictionnaire) les termes tronqués si nécessaire. On obtient dans l'exemple précédent : « translate », « language », « text » et « translate result ». Après cela et au moyen de dictionnaires appropriés, Il cherche à associer un nom à chaque verbe rencontré ainsi que des définitions de chaque nom. Le cas échéant, il procède à un examen de ces définitions pour en conserver une plutôt qu'une autre. Des techniques complémentaires sont connues, lesquelles permettent, le cas échéant, de simplifier ces traitements et d'aboutir à des résultats facilement exploitables.

La cinquième étape, ci-dessus, a comme principal but de poser une étiquette sémantique sur chacun des noms de chaque entrée/sortie de la structure syntaxique utile précitée du service. On posera ainsi par exemple l'étiquette "text" pour l'entrée "text" correspondante. De la sorte, on obtient une description remaniée du service. Dans l'exemple du service de traduction, on obtient une description semblable à l'extrait de fichier XML décrit plus haut.

Apposer une étiquette sémantique - laquelle peut être vue comme un « super type » - permet une détermination efficace de la connectivité des services web. D'autres techniques d'analyse sémantique peuvent néanmoins être envisagée pour cette apposition.

On dispose à présent de tous les éléments permettant la connexion d'un service web avec un autre.

Dans ce qui suit, l'étape de détermination de connectivité de services web est décrite au travers d'un exemple.

Dans cet exemple, un utilisateur exprime dans sa requête qu'il souhaite obtenir l'affichage du résultat d'une traduction d'un flux RSS (par exemple issu de pages web d'un quotidien) à partir d'un service de traduction et d'un service RSS. Un flux RSS reprend notamment automatiquement soit les titres, soit le texte intégral d'un site d'actualité. Ce format est particulièrement utilisé pour exploiter des pages dont le contenu doit être mis à jour régulièrement.

Dans le présent cas de figure, on suppose qu'à ce stade, la requête a été transmise puis analysée, que des exigences de services web en ont été tirées et enfin que ces services web ont été découverts, par consultation d'annuaires UDDI. On dispose donc des services web nécessaires. Un problème qui se pose maintenant est donc de pouvoir composer automatiquement ces services pour obtenir une traduction automatique d'un contenu RSS.

On dispose tout d'abord d'un service web de traduction, qui possède une entrée (un texte écrit dans une première langue ou « langue 1 ») et une sortie (un autre texte écrit dans une deuxième langue ou « langue 2 »). L'analyse de la description WSDL correspondante conduit à l'identification de données d'entrée et sorties, décrites par les ensembles de triplets suivants :
{entrée 1, type=string, étiquette sémantique=texte à traduire} ;
{entrée 2, type=string, étiquette sémantique=langue 1};
{sortie 1, type=string, étiquette sémantique=texte traduit} ; et
{sortie 2, type=string, étiquette sémantique=langue 2}.

Le mot « string » indique une chaîne de caractères.

On dispose aussi du service web fournissant un flux RSS. Ce service web fournit par exemple, après analyse par l'outil précité, des sorties spécifiées comme suit:
{sortie 1, type=string, étiquette sémantique=titre} ;
{sortie 2, type=string, étiquette sémantique=langue du titre} ;
{sortie 3, type=string, étiquette sémantique=description} ; et
{sortie 4, type=string, étiquette sémantique=langue de la description} ;
.... .

On dispose en outre d'un service d'affichage, dont les caractéristiques identifiées après analyse peuvent se lire comme suit :
{entrée=texte à afficher, type=string, étiquette sémantique=texte} ; et
{sortie=affichage, type=écran, étiquette sémantique=affichage};

La connectivité de chacun des services à composer est ensuite déterminée, de préférence deux à deux. Pour ce faire, on peut rechercher une correspondance sémantique entre la ou les entrées de l'un des services web et la ou les sorties d'un autre service, c'est-à-dire une compatibilité entre deux triplets sémantiques.

Cette compatibilité peut, en particulier, répondre à trois conditions :
a) le premier triplet concerne une sortie, l'autre une entrée
b) les deux types sont identiques ou compatibles
c) les deux étiquettes sémantiques sont identiques ou compatibles.

Une table de compatibilité pourra à cet égard être prévue et mise à disposition de l'outil informatique précité.

Dans l'exemple ci-dessus, une compatibilité est automatiquement trouvée dans le sens :
Service RSS -> service de traduction -> Service d'affichage

En effet, une table mise à disposition du module sémantique peut permettre d'établir une parfaite correspondance deux à deux, en utilisant chacun des services.

Au contraire, la séquence « Service RSS -> Service d'affichage -> Service de traduction » ne sera pas prise en compte du fait de l'incompatibilité sémantique entre la sortie du service d'affichage et l'entrée du service de traduction.

Notons qu'un processus itératif ou « répétitive de traitement » peut, le cas échéant, être adopté afin de coupler un nombre donné de sorties de même nature d'un premier service à une entrée d'un autre service. Ceci est particulièrement utile dans l'exemple précédent. De la sorte, chaque sortie du service RSS (titre, description, etc.) est traduite puis affichée.

Plus en détails, la détermination de la connectivité des services web permet peut être effectuée en deux temps :
(i) d'abord selon un ordre logique issu de l'examen de leurs entrées-sorties respectives ; et
(ii) ensuite par la connexion des entrées-sorties elles-mêmes, selon l'examen détaillé de leurs étiquette sémantique et de leurs types (soit en effectuant le test de compatibilité évoqué plus haut).

Ainsi, un module spécifique se charge de déterminer globalement un ordre d'orchestration des services (tel service vient avant tel autre ...) puis de déterminer à un niveau détaillé quelle sortie d'un service se connecte avec quelle entrée d'un autre service.

L'ordre d'orchestration global peut, le cas échéant et comme évoqué plus haut, être proposé (étape 52) à l'utilisateur pour validation (étape 55). Celui-ci peut toutefois décider de changer cet ordre ou de faire intervenir un autre service.

L'ordre d'orchestration est par exemple déterminé sur la base d'heuristiques qui peuvent être implémentées dans une base de règles et placées sous le contrôle d'un moteur d'inférence. Par exemple si un service A possède en entrée-sortie des étiquettes sémantiques correspondant à du texte et un service B a en entrée des étiquettes différentes ou incompatibles, alors l'ordre sera préférentiellement : B puis A.

Dans l'exemple décrit plus haut : on commencera par l'appel du service RSS, qui a en sortie des étiquettes sémantiques correspondant à du texte (l'étiquette en entrée correspond par exemple à une adresse web et est différente de « texte »). Ensuite, on appelle le service de traduction qui, lui, a en entrée et en sortie une étiquette correspondant à du texte. Donc, selon le schéma exposé plus haut, le service de traduction est placé en aval du service RSS. En outre, la sortie du service RSS pourra être connectée à l'entrée du service de traduction.

Au vu des compatibilités manifestes issues de la comparaison des étiquettes sémantiques et du type, les propositions de connexion automatiques seront les suivantes :
- la sortie texte correspondant à des titres du service RSS est susceptible d'être connectée à l'entrée (unique) texte du service de traduction ; et
- la sortie texte correspondant à une description du service RSS est susceptible d'être connectée à l'entrée (unique) texte du service de traduction.
Ces propositions peuvent être directement retenues pour l'étape suivante de composition ou, le cas échéant, être validées par un utilisateur, comme indiqué plus haut.

Ensuite, une fois que la connectivité a été établie, la composition effective des services web, en fonction de leur connectivité, est réalisée par un module spécifique d'assemblage. A cet égard, une chaîne de connexions peut par exemple être traduite dans un langage formel d'orchestration ou de chorégraphie, tel que BPEL (voir la définition en tête du document). La chaîne de connexions peut alors être soumise à un moteur d'orchestration (ou "orchestration engine"), qui se chargera de l'exécuter (étape 60) comme s'il s'agissait d'un service web à part entière. En particulier, une chaîne de connexions du type :
« Entrée 1 » d'un service A => produit « sortie 1 »
   -> « Entrée 2 » du service B => produit « sortie 2 »
      -> « Entrée 3 » du service C => produit « résultat final 3 »,
peut être traduite puis soumise à un moteur qui l'exécutera comme un service D à part entière composé de A, B et C, et qui, à partir de l'entrée 1, peut fournir directement le « résultat final 3 ».

Le module d'assemblage permet dès lors une connexion automatique des services web.

On obtient ainsi un service composé automatiquement (étape 60) par l'outil informatique précité.

Le service ainsi composé est mis à disposition de l'utilisateur (étapes 65, 70).

Selon une alternative, le service peut en outre demeurer (dans ce cas, il est créé) à disposition de l'utilisateur, le cas échéant pour une période de temps donnée.

L'intégration de cet outil dans certaines applications permet d'obtenir une composition de services en temps réel. Dans l'exemple ci-dessus, il est possible d'obtenir un flux RSS traduit dans une langue souhaitée, sur une requête en ce sens et précisant les éléments nécessaires.

D'autres exemples de compositions peuvent naturellement être envisagés.

## Revendications

1. Procédé (100) de création de service à partir d'une requête, comprenant des étapes :
- d'analyse (30) sémantique d'une requête en langage naturel ;
- d'identification (35) d'exigences de services web en fonction de l'analyse (30) sémantique effectuée ; et
- de détermination (40) et séquençage (50) de services web en fonction des exigences de services identifiées.

2. Le procédé (100) selon la revendication 1, comprenant en outre une étape d'orchestration (60) des services web séquencés.

3. Le procédé (100) selon la revendication 1 ou 2, dans lequel l'étape de détermination de services web comprend une accession à un annuaire (200) UDDI.

4. Le procédé (100) selon la revendication 1, 2 ou 3, dans lequel l'étape d'analyse (30) sémantique de la requête comprend:
- une analyse (30) lexicale et sémantique.

5. Le procédé (100) selon la revendication 4, dans lequel l'étape de détermination (40) et séquençage (50) se décompose en une étape de détermination (40) de services web puis de séquençage (50) des services web déterminés.

6. Le procédé (100) selon la revendication 5, dans lequel l'étape de détermination (40) de services web comprend :
- l'identification de caractéristiques de services web à partir d'une description de services web;
- la comparaison d'au moins certaines de ces caractéristiques aux exigences identifiées ; et
- la détermination de services web en fonction d'un résultat de la comparaison.

7. Le procédé (100) selon la revendication 5 ou 6, dans lequel l'étape de séquençage (50) de services web comprend en outre une étape:
- de séquençage en fonction des exigences identifiées.

8. Le procédé (100) selon la revendication 6 ou 7, dans lequel l'étape d'identification de caractéristiques de services web comprend, pour chacun des services :
- l'accession à une description du service web ; et
- l'identification de caractéristiques de ce service à partir de la description de ce service.

9. Le procédé (100) selon la revendication 8, dans lequel la description de service web est en langage WSDL.

10. Le procédé (100) selon l'une des revendications 6 à 9, dans lequel l'étape d'identification de caractéristiques comprend une analyse sémantique de la description de services web.

11. Le procédé (100) selon l'une des revendications 6 à 10, dans lequel les caractéristiques identifiées impliquent une entrée et/ou une sortie pour chacun des services déterminés.

12. Le procédé (100) selon l'une des revendications 6 à 11, dans lequel l'étape de séquençage (50) comprend :
- un test de compatibilité impliquant au moins une caractéristique identifiée pour chacun des services déterminés.

13. Le procédé (100) selon la revendication 11 ou 12, dans lequel les caractéristiques identifiées comprennent, pour chacun des services :
- au moins deux ensembles avec au moins trois champs chacun, et dans lequel:
- un premier champ de l'un des ensembles a trait à une entrée du service;
- un premier champ de l'autre des ensembles a trait à une sortie du service; et
- un deuxième champ de chacun des ensembles a trait à un type de données relatif au premier champ ;
- un troisième champ de chacun des ensembles a trait à une étiquette sémantique relative au premier champ;
et dans lequel en outre l'étape de composition comprend :
- une étape de test de compatibilité impliquant les trois champs de chacun des ensembles.

14. Le procédé (100) selon l'une quelconque des revendications 1 à 13, comprenant en outre une étape de :
- création (60) d'un nouveau service web à partir des services web déterminés et séquencés.

15. Le procédé (100) selon la revendications 14, comprenant en outre les étapes:
- de réception (55) d'une validation des services web déterminés et séquencés; et
- de mise à disposition (65) du nouveau service web.

16. Produit de programme d'ordinateur adapté à mettre en oeuvre les étapes du procédé (100) selon l'une des revendications 1 à 15.

17. Système informatique comprenant des moyens de code adaptés à mettre en oeuvre les étapes du procédé (100) selon l'une des revendications 1 à 15.
